# EUROPÄISCHE PATENTSCHRIFT

(11) **EP 0 779 449 B1**
(45) Veröffentlichungstag und Bekanntmachung des Hinweises auf die Patenterteilung: **22.03.2000**
(21) Anmeldenummer: 96118848.9
(22) Anmeldetag: 25.11.1996
(51) Int. Cl.: F16H 1/28

(54) **Planetengetriebe**
Planetary transmission
Transmission planétaire

(30) Priorität: 13.12.1995 DE 19546586
(43) Veröffentlichungstag der Anmeldung: 18.06.1997
(73) Patentinhaber: Maxon-Motor GmbH, 79350 Sexau (DE)
(72) Erfinder: Fütterer, Bodo, 6005 Luzern (CH)
(74) Vertreter: Grünecker, Kinkeldey, Stockmair & Schwanhäusser Anwaltssozietät

(56) Entgegenhaltungen:
- FR-A- 2 661 963
- GB-A- 1 073 535
- "SLIDING PLANET GEARS PROVIDE OPTIMUM LOAD SHARING" EUREKA (INC. ENGINEERING MATERIALS AND DESIGN), Bd. 11, Nr. 7, 1.Juli 1991, Seite 7 XP000249131
- "SPRITZGIESSEN KERAMISCHER UND METALLISCHER SINTERFORMTEILE" PLASTVERARBEITER, Bd. 44, Nr. 3, 1.März 1993, Seiten 108-110, 112, XP000361354

## Beschreibung

Die Erfindung bezieht sich auf ein Planetengetriebe mit einem um eine Drehachse drehbaren Planetenträger, einem Sonnenrad, mindestens einem Planetenrad und einem Hohlrad, wobei an einer Stirnseite des Planetenträgers mindestens ein Achszapfen hervorsteht, auf dem das Planetenrad mit seiner Achsöffnung drehbar gelagert ist.

Insbesondere bei kleinen Planetengetrieben, bei denen Sinterwerkstoffe zum Einsatz kommen, wurde festgestellt, daß ein gleichmäßiges Tragen der Zahnflanken des zwischen Hohlrad und Sonnenrad laufenden Planetenrades meist nicht erreicht wurde. Unter anderem führte dieser Umstand dazu, daß die Lebensdauer solcher Getriebe für viele Anwendungen unzureichend waren. Darüber hinaus war es für die Hersteller schwierig die Lebensdauer eines solchen Getriebes zu bestimmen, da Streuungen in der Größenordnung Faktor 10 bis 100 aufgetreten sind. Insbesondere in der Abgangsstufe der Planetengetriebe, in der die höchsten Kräfte bei kleinen Gleitgeschwindigkeiten auftreten, muß sichergestellt werden, daß alle Planetenräder gleichmäßig tragen. Durch eine Ungleichmäßigkeit können örtlich sehr hohe, weit über den zulässigen Bereich hinausgehende Kräfte auftreten, die aufgrund der hohen Untersetzung durch die Antriebsleistung nicht registriert werden können. Zusätzlich treten schwebende Geräusche auf, die periodisch mit der Drehzahl schwanken. Diese Umstände und die bei Kleinplanetengetrieben im Stand der Technik auftretenden großen Streuungen konnten die Fachwelt bisher nicht befriedigen.

Es ist die Aufgabe der vorliegenden Erfindung ein Planetengetriebe, insbesondere mit kleinen Abmessungen, bereitzustellen, das eine verbesserte Lebensdauer aufweist.

Getriebe, bei denen das Planetenrad zumindest radial verschieblich bezüglich der Drehachse des Planetenträgers ausgebildet ist, sind z.B. aus FR-A-2 661 963 bekannt. Unter "radial verschieblich" wird hier ein über das normale Maß hinausgehendes Spiel verstanden, das in radialer Richtung einer quasi schwimmenden Lagerung der Planetenräder bewirkt.

Der auf diese Art erreichte Toleranzausgleich bewirkt außerdem, daß zwischen den Achszapfen und den Achsöffnungen der Planetenräder keine Zwangsführungskräfte in radialer Richtung übertragen werden, die bei Ungenauigkeiten auftreten würden. Umfangreiche Dauerversuche haben in beeindruckender Weise gezeigt, daß sich die Lebensdauer solcher Getriebe erhöht. Des weiteren wurde ein gleichmäßiges Tragbild an den Zahnflanken festgestellt, was wohl die Ursache für die verbesserte Lebensdauer ist.

Erfindungsgemäß wird die radiale Verschieblichkeit dadurch erreicht werden, daß die Querschnittsform des Achszapfens am Planetenträger von der Querschnittsform der Achsöffnung des Planetenrades derart abweicht, daß das Planetenrad bezüglich des Achszapfens radial verschiebbar gelagert ist. Dadurch, daß jedes Planetenrad zwischen dem Hohlrad und dem Sonnenrad läuft weist dieses bereits eine Führungskomponente auf, weshalb vom Achszapfen hauptsächlich eine tangentiale Vorschubkraft aufzubringen ist. Die Veränderung des Querschnittes vom Achszapfen derart, daß sich das Planetenrad radial verschieben kann, führt in den meisten Anwendungsfällen nicht zu Problemen. Je mehr Planetenräder um das Sonnenrad gruppiert sind, um so besser eignet sich diese Maßnahme.

Das Planetenrad ist sowohl radial als auch tangential bezüglich der Drehachse des Planetenträger verschiebbar gelagert, wobei die tangentiale Verschiebbarkeit günstigerweise geringer als die radiale Verschiebbarkeit sein kann. In den meisten Anwendungsfällen, insbesondere bei Kleinplanetengetrieben, kann durchaus ein tangentiales Spiel zwischen Achszapfen und Planetenrad zugelassen werden. Dadurch vereinfacht sich die Fertigung des Achszapfens, da relativ einfache Querschnitte die Erfordernisse der Erfindung erfüllen. Dieses Spiel zwischen dem Achszapfen und der Achsöffnung hat darüber hinaus den Vorteil, daß das Planetenrad auch eine Winkelverlagerung zur Achse des Achszapfens ausführen kann, um auch eine Nichtparallelität der verschiedenen Drehachsen auszugleichen. Insbesondere eignet sich gemäß einer Ausführungsform ein Achszapfen, der im wesentlichen einen elliptischen Querschnitt aufweist. Durch die Ellipsenform lassen sich die Berührungsflächen zwischen Achszapfen und Achsöffnung optimieren, bei gleichzeitiger Verwirklichung der radialen und geringeren tangentialen Verschieblichkeit.

Bei einer bevorzugten Ausführungsform liegt das Verhältnis von radialer zur tangentialen Verschieblichkeit größer 1 bei größer als 2.

Besonders günstig wirkt sich die vorliegende Erfindung bei einer Variante aus, bei der zumindest die Achszapfen des Planetenträgers aus einem Sinterwerkstoff hergestellt sind. Da Sinterwerkstoffe sehr anfällig für ungleichmäßige Belastungen sind, stellt die vorliegende Erfindung diesbezüglich eine erhebliche Verbesserung dar.

Insbesondere kann gemäß einer Variante als Sinterwerkstoff Zirkoniumoxid verwendet werden, wodurch sich die Lebensdauer nochmals beträchtlich erhöhen läßt.

Des weiteren wird Schutz begehrt für ein Verfahren zum Herstellen eines Planetengetriebes nach einem der Ansprüche 1 bis 6. Das Verfahren zeichnet sich dadurch aus, daß zumindest der Achszapfen am Planetenträger für das Planetenrad durch einen Sintervorgang derart hergestellt ist, daß er einen von der zylindrischen Achsöffnung des Planetenrades abweichenden Querschnitt aufweist, der zumindest ein radiales Verschieben des Planetenrades auf dem Achszapfen bezüglich der Drehachse des Planetenträgers ermöglicht.

Da sich durch einen Sintervorgang alle möglichen Querschnittsformen problemlos herstellen lassen, eignet sich das vorliegende Verfahren bestens zur Herstellung eines erfindungsgemäßen Planetengetriebes.

Des weiteren kann der Achszapfen des Planetenrades am Planetenträger mit einem im wesentlichen elliptischen Querschnitt hergestellt werden, wodurch sich ein günstiges Verhältnis zwischen radialer und tangentialer Verschieblichkeit erzeugen läßt.

Günstigerweise kann der pulverförmige Sinterwerkstoff mit einem Kunststoff gemischt und auf einer Spritzgußmaschine zu einem Rohling gespritzt werden. Diese Verfahrensvariante eignet sich zur Herstellung vielfältigster Formen von Rohlingen aus Sinterwerkstoffen. Der Kunststoff wird in weiterführenden Verfahren zum Großteil wieder aus dem Rohling entfernt.

In einer Verfahrensvariante kann zumindest der Achszapfen nach dem Sintervorgang an seiner Umfangsfläche poliert werden. Hierdurch lassen sich insbesondere bei Sintermaterialien beste Oberflächen und einen dadurch resultierenden geringeren Verschleiß erzielen.

Im folgenden wird ein Ausführungsbeispiel der vorliegenden Erfindung anhand einer Zeichnung näher erläutert. Es zeigt:
- Fig. 1: eine Abgangsstufe eines Planetengetriebes in schematischer Schnittdarstellung,
- Fig. 2: einen erfindungsgemäßen Planetenträger in perspektivischer Darstellung,
- Fig. 3: einen Ausschnitt des Planetenträgers mit Planetenrad in vergrößerter Vorderansicht und
- Fig. 4: eine schematische Illustrationszeichnung zur Erläuterung des Verschiebevorgangs eines Achszapfens in einer Achsöffnung des Planetenrades.

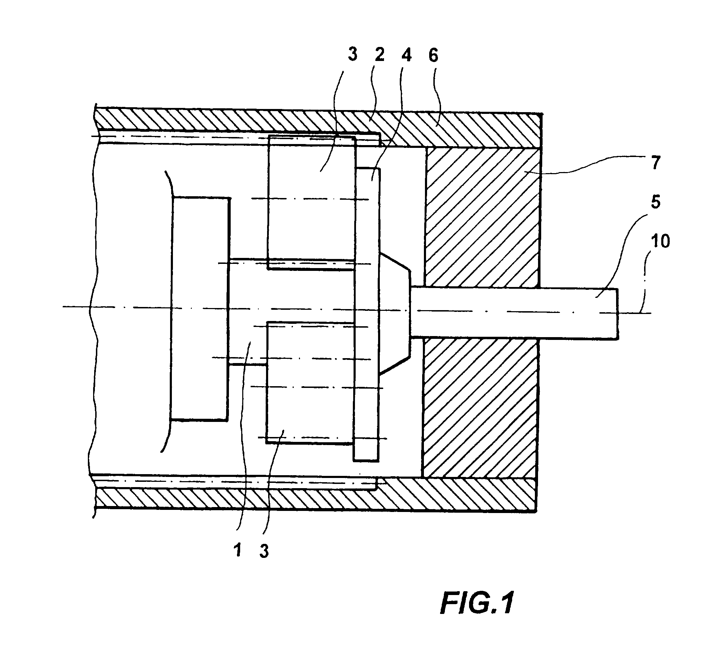

In Figur 1 ist die Abgangsstufe eines Planetengetriebes dargestellt, das ein Sonnenrad 1, ein koaxial dazu angeordnetes Hohlrad 2, drei um das Sonnenrad 1 gruppierte Planetenräder 3 und einen Planetenträger 4 mit Abgangswelle 5 umfaßt. Das Sonnenrad 1 kann sowohl an einem elektrischen Kleinmotor als auch die Abgangswelle einer vorgeschalteten Planetengetriebestufe sein. Aus diesem Grunde ist der Anschluß des Sonnenrades 1 lediglich schematisch dargestellt. Das Hohlrad 2 dient gleichzeitig als Gehäuse des Planetengetriebes und in dessen Endbereich 6 ist eine Lagerscheibe 7 zum Lagern der Abgangswelle 5 angeordnet. Die Planetenräder 3 sind gleichmäßig am Umfang verteilt angeordnet und kämen üblicherweise das Sonnenrad 1 und die Innenverzahnung des Hohlrades 2.

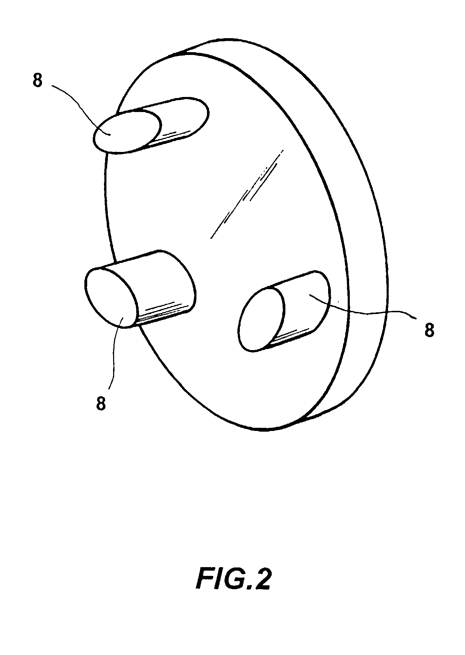

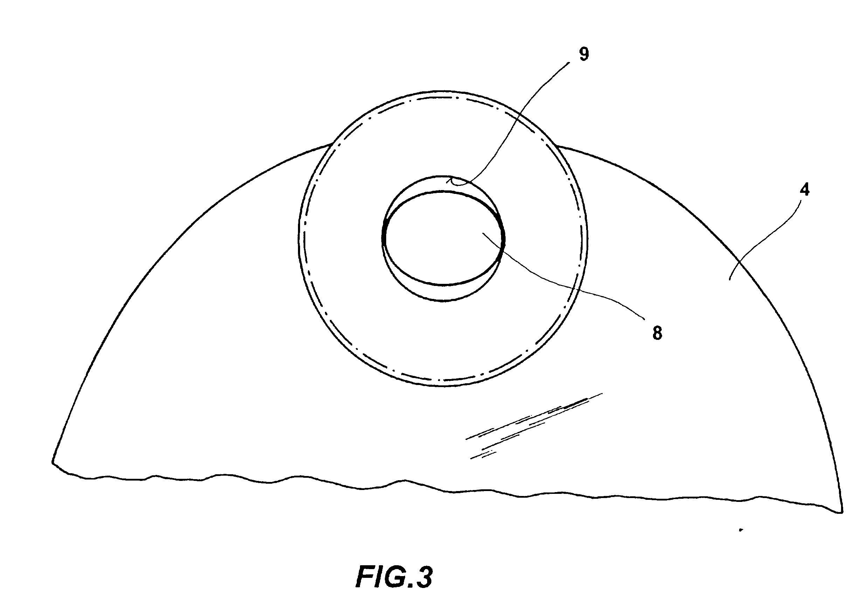

Wie insbesondere anhand der Figuren 2 bis 4 zu erkennen ist, umfaßt der Planetenträger 4 entsprechend drei an einer Stirnseite senkrecht hervorstehende Achszapfen 8. Die Achszapfen 8 dienen zur Aufnahme und Führung der Planetenräder 3 und sind entsprechend in eine Achsöffnung 9 der Planetenräder 3 eingeschoben. Die Achsöffnung 9 der Planetenräder 3 weist einen kreisförmigen Querschnitt auf, wohingegen der Querschnitt der Achszapfen 8 im wesentlichen elliptisch ausgebildet ist. Die Ellipse ist so ausgerichtet, daß ihr engster Querschnittsbereich senkrecht zur Drehachse 10 angeordnet ist. Die breitesten Bereiche des Ellipsenquerschnittes berühren die Achsöffnung 9 ungefähr am Teilkreisdurchmesser (durch die Form bedingt etwas oberhalb).

Sämtliche in der Zeichnung dargestellten Bauelemente des Planetengetriebes sind aus Sinterwerkstoffen hergestellt und weisen entsprechend hohe Festigkeit auf. Insbesondere bei der hier erläuterten Abgangsstufe treten aufgrund der relativ geringen Umlaufgeschwindigkeiten sehr hohe Kräfte auf. Zumindest für die Achszapfen 8 kann zur Verbesserung der Lebensdauer als Sinterwerkstoff Zirkoniumoxid verwendet werden. Der Planetenträger 4 und die Achszapfen 8 können aber auch einteilig ausgebildet sein.

Bevorzugt werden die Sinterteile durch Mischen des pulverförmigen Sinterwerkstoffes mit Kunststoff, anschließendem Spritzen eines Rohlings auf einer Spritzgußmaschine und abschließendem Sintervorgang hergestellt. Die Oberflächen der Achszapfen 8 und Achsöffnungen 9, sowie der Abgangswelle 5 können zusätzlich noch poliert werden. Auch die Zahnflanken der Zahnräder können nachträglich in Kalibrier- und Poliervorgängen unterzogen werden.

Im folgenden wird die Wirkungs- und Funktionsweise des obigen Ausführungsbeispiels näher erläutert.

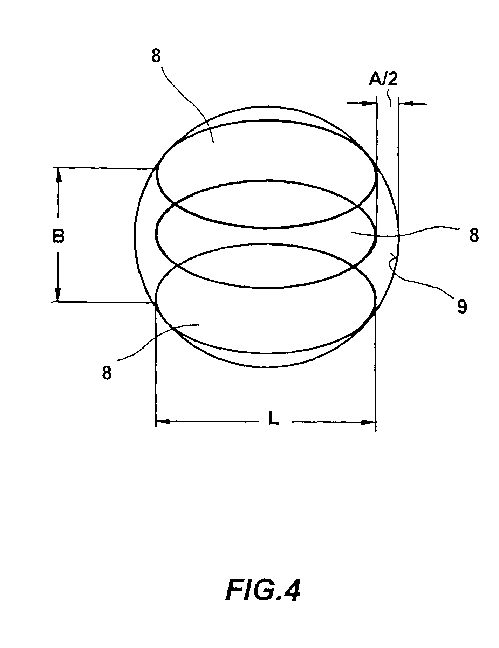

Da der elliptische Querschnitt des Achszapfens 8 eine Länge L aufweist, die kleiner ist als der Querschnitt der Achsöffnung 9, entsteht sowohl ein tangentiales Spiel A, als auch ein radiales Spiel B. In der Figur 4 sind diese Größenunterschiede übertrieben dargestellt. Z.B. kann bei einem Durchmesser der Achsöffnung 9 von 3,0 mm das Spiel A ca. 0,01 mm und Spiel B ca. 0,1 mm betragen. Daraus ergibt sich ein Verhältnis von radialer zur tangentialen Verschiebung von 10.

Durch diese Ausführung ist gewährleistet, daß das Tangentialspiel wesentlich geringer ist als das Radialspiel. Durch die maßliche Überbestimmung in der Abgangsstufe des Planetengetriebes kann es nie ganz sicher gestellt werden, daß die Drehachse 10 koaxial zur Achse des Hohlrades 2 und des Sonnenrades 1 dreht. Des weiteren kann nicht absolut sichergestellt werden, daß sich alle drei Achszapfen 8 auf konzentrischen Teilkreisen um die Drehachse 10 bewegen.

Damit bei derartigen Getrieben, bei denen insbesondere Sinterteile, wie z.B. die Achszapfen 8 und Planetenräder 3, verwendet werden eine im wesentlichen gleichmäßige Flankenpressung der ineinander kämmenden Zähne erreicht wird, sind die Planetenräder 3 aufgrund der Querschnittsverhältnisse von Achszapfen 8 und Achsöffnung 9 radial verschiebbar. Dadurch können sich diese zu jedem Zeitpunkt entsprechend selbständig zwischen dem Sonnenrad 1 und dem Hohlrad 2 zentrieren, ohne daß radiale Zwangskräfte von den Achszapfen 8 auf die Planetenräder 3 übertragen werden. Das radiale Spiel B muß im Prinzip lediglich so groß gewählt werden, daß die durch die Toleranzen zulässigen Maßabweichungen ausgeglichen werden können.

Dauerversuche bei dieser Anordnung haben gezeigt, daß sich die Lebensdauer aufgrund einer gleichmäßigeren Flankenpressung (wie anhand der Berührungsstellen begutachtet werden konnte) erheblich steigern ließ. Insbesondere beim Einsatz von Sinterteilen und den kleinen Abmessungen bei dem oben beschriebenen Planetengetriebe, können nunmehr bessere Aussagen über die Lebensdauer getroffen werden.

Der Vollständigkeit halber sei noch erwähnt, daß der Achszapfen 8 auch eine an die Krümmung des Teilkreises angepaßte Form aufweisen kann, so daß die Berührpunkte im wesentlichen exakt auf dem Teilkreis liegen.

## Patentansprüche

1. Planetengetriebe mit einem um eine Drehachse (10) drehbaren Planetenträger (4), einem Sonnenrad (1), mindestens einem Planetenrad (3) und einem Hohlrad (2), wobei an einer Stirnseite des Planetenträgers (4) mindestens ein Achszapfen (8) hervorsteht, auf dem das Planetenrad (3) mit seiner Achsöffnung (9) drehbar gelagert ist und das Planetenrad (3) zumindest radial verschieblich bezüglich der Drehachse (10) des Planetenträgers (4) ausgebildet ist,
**dadurch gekennzeichnet**,
daß die Querschnittsform des Achszapfens (8) am Planetenträger (4) von der Querschnittsform der Achsöffnung (9) des Planetenrades derart abweicht, daß das Planetenrad (3) bezüglich des Achszapfens (8) radial verschiebbar gelagert ist.

2. Planetengetriebe nach Anspruch 1,
**dadurch gekennzeichnet**,
daß das Planetenrad (3) sowohl radial als auch tangential bezüglich der Drehachse (10) des Planetenträgers (4) verschiebbar gelagert ist, wobei die tangentiale Verschiebbarkeit geringer ist als die radiale Verschiebbarkeit.

3. Planetengetriebe nach Anspruch 1 oder 2,
**dadurch gekennzeichnet**,
daß der Achszapfen (8) am Planetenträger (4) einen im wesentlichen elliptischen Querschnitt aufweist.

4. Planetengetriebe nach einem der Ansprüche 1 bis 3,
**dadurch gekennzeichnet**,
daß das Verhältnis von radialer zur tangentialer Verschieblichkeit im Bereich größer 2 ist.

5. Planetengetriebe nach einem der Ansprüche 1 bis 4,
**dadurch gekennzeichnet**,
daß zumindest der Achszapfen (8) des Planetenträgers (4) aus einem Sinterwerkstoff hergestellt ist.

6. Planetengetriebe nach Anspruch 5,
**dadurch gekennzeichnet**,
daß als Sinterwerkstoff Zirkoniumoxid verwendet worden ist.

7. Verfahren zum Herstellen eines Planetengetriebes nach einem der Ansprüche 1 bis 6,
**dadurch gekennzeichnet**,
daß zumindest der Achszapfen (8) am Planetenträger (4) durch einen Sintervorgang derart hergestellt ist, daß er einen von der zylindrischen Achsöffnung (9) des Planetenrades (3) abweichenden Querschnitt aufweist, der zumindest ein radiales Verschieben der Planetenräder (3) auf dem Achszapfen (8) bezüglich der Drehachsen (10) des Planetenträgers (4) ermöglicht.

8. Verfahren nach Anspruch 7,
**dadurch gekennzeichnet**,
daß der Achszapfen (8) des Planetenrades (3) am Planetenträger (4) mit einem im wesentlichen elliptischen Querschnitt hergestellt wird.

9. Verfahren nach Anspruch 7 oder 8,
**dadurch gekennzeichnet**,
daß der pulverförmige Sinterwerkstoff mit einem Kunststoff gemischt und auf einer Spritzgußmaschine zu einem Rohling gespritzt wird.

10. Verfahren nach einem der Ansprüche 1 bis 9,
**dadurch gekennzeichnet**,
daß zumindest der Achszapfen (8) nach dem Sintervorgang an seiner Umfangsfläche poliert wird.

## Claims

1. A planetary transmission comprising a planet carrier (4) which is adapted to be rotated about an axis of rotation (10), a sun gear (1), at least one planetary gear (3), and a ring gear (2), at least one axle end (8) projecting beyond one end face of said planet carrier (4) and said planetary gear (3) being rotatably supported on said axle end (8) by means of its axle-reception opening (9), and said planetary gear (3) being constructed such that it is at least radially displaceable with regard to the axis of rotation (10) of said planet carrier (4),
**characterized in that**
the cross-sectional shape of the axle end (8) on the planet carrier (4) deviates from the cross-sectional shape of the axle-reception opening (9) of the planetary gear in such a way that said planetary gear (3) is supported in a radially displaceable manner relative to said axle end (8).

2. A planetary transmission according to claim 1,
**characterized in that**
the planetary gear (3) is supported such that it is adapted to be displaced radially as well as tangentially relative to the axis of rotation (10) of the planet carrier (4), the amount of tangential displaceability being smaller than the amount of radial displaceability.

3. A planetary transmission according to claim 1 or 2,
**characterized in that**
the axle end (8) on the planet carrier (4) has a substantially elliptical cross-section.

4. A planetary transmission according to one of the claims 1 to 3,
**characterized in that**
the ratio of radial to tangential displaceability is greater than 2.

5. A planetary transmission according to one of the claims 1 to 4,
**characterized in that**
at least the axle end (8) of the planet carrier (4) is made of a sintered material.

6. A planetary transmission according to claim 5,
**characterized in that**
zirconium oxide has been used as a sintered material.

7. A method of producing a planetary transmission according to one of the claims 1 to 6,
**characterized in that**
at least the axle end (8) on the planet carrier (4) is produced by means of a sintering process in such a way that it has a cross-section which deviates from the cylindrical axle-reception opening (9) of the planetary gear (3) and which permits at least a radial displacement of the planetary gears (3) on said axle end (8) with regard to the axis of rotation (10) of the planet carrier (4).

8. A method according to claim 7,
**characterized in that**
the axle end (8) of the planetary gear (3) on the planet carrier (4) is produced such that it has a substantially elliptical cross-section.

9. A method according to claim 7 or 8,
**characterized in that**
the powdery sintered material is mixed with a plastic material and injection moulded on an injection moulding machine so as to produce a blank.

10. A method according to one of the claims 1 to 9,
**characterized in that**
at least the axle end (8) is polished at its circumferential surface after the sintering process.

## Revendications

1. Engrenage planétaire comportant un porte-satellites (4) apte à tourner autour d'un axe de rotation (10), un planétaire (1), au moins un satellite (3) et une couronne (2), étant précisé qu'il est prévu au moins un tourillon (8) qui dépasse d'un côté frontal du porte-satellites (4) et sur lequel le satellite (3) est monté, rotatif, avec son ouverture pour tourillon (9), et que le satellite (3) est conçu pour être mobile au moins radialement par rapport à l'axe de rotation (10) du porte-satellites (4),
caractérisé en ce que la forme de section transversale du tourillon (8) prévu sur le porte-satellites (4) diffère de celle de l'ouverture pour tourillon (9) du satellite de telle sorte que le satellite (3) est monté mobile radialement par rapport au tourillon (8).

2. Engrenage planétaire selon la revendication 1, caractérisé en ce que le satellite (3) est monté de manière à être mobile aussi bien radialement que tangentiellement par rapport à l'axe de rotation (10) du porte-satellites (4), la mobilité tangentielle étant plus faible que la mobilité radiale.

3. Engrenage planétaire selon la revendication 1 ou 2, caractérisé en ce que le tourillon (8) prévu sur le porte-satellites (4) présente une section transversale globalement elliptique.

4. Engrenage planétaire selon l'une des revendications 1 à 3, caractérisé en ce que le rapport de la mobilité radiale à la mobilité tangentielle est supérieur à 2.

5. Engrenage planétaire selon l'une des revendications 1 à 4, caractérisé en ce que le tourillon (8), au moins, du porte-satellites (4) est fabriqué à partir d'un matériau fritté.

6. Engrenage planétaire selon la revendication 5, caractérisé en ce qu'on a utilisé comme matériau fritté de l'oxyde de zirconium.

7. Procédé pour fabriquer un engrenage planétaire selon l'une des revendications 1 à 6, caractérisé en ce que le tourillon (8), au moins, prévu sur le porte-satellites (4) est fabriqué grâce à une opération de frittage de manière à présenter une section transversale qui soit différente de celle de l'ouverture cylindrique pour tourillon (9) du satellite (3) et qui permette au moins un déplacement radial des satellites (3) sur le tourillon (8) par rapport aux axes de rotation (10) du porte-satellites (4).

8. Procédé selon la revendication 7, caractérisé en ce que le tourillon (8) du satellite (3) prévu sur le porte-satellites (4) est réalisé avec une section transversale globalement elliptique.

9. Procédé selon la revendication 7 ou 8, caractérisé en ce que le matériau fritté pulvérulent est mélangé à une matière plastique et injecté sur une machine d'injection pour former une ébauche.

10. Procédé selon l'une des revendications 1 à 9, caractérisé en ce que le tourillon (8), au moins, est poli sur sa surface circonférencielle après le frittage.
